# EUROPEAN PATENT APPLICATION

(11) **EP 2 515 619 A1**
(43) Date of publication of application: **24.10.2012**
(21) Application number: 12162654.3
(22) Date of filing: 30.03.2012
(51) Int. Cl.: H05B 37/02

(54) **Lamp with communications antenna and light level sensor**

(30) Priority: 18.04.2011 GB 201106501
(71) Applicant: Signplay Limited, Norwich Norfolk NR14 6NR (GB)
(72) Inventor: Aarons, David John, Norwich, Norfolk NR14 6NR (GB)
(74) Representative: McLean, Robert Andreas

(57) **Abstract**

The present invention relates to lighting installations that make use of ambient light level sensors to control the light output from a lamp, for example to allow the artificial lighting to adapt to natural lighting conditions, and that also have an antenna to permit communication with the lighting installation. The lighting installation includes a light gathering protective cover (1) for an ambient light level sensor. The protective cover (1) comprises a main body (2) moulded in a light transmissive material and a radio-frequency (rf) antenna (36). The main body (2) has an external surface for collecting ambient light, a light receiving portion (34) that is within the main body (2) for receiving light collected from the external surface, and a base portion (4) that has mounting means including a mounting surface (8,46) for mounting to a lamp housing. The base portion (4) has within the bounds of the mounting surface a first connection means (30) by which a photodetector may be optically connected to the light receiving portion and also a second connection means (38) by which an electrical connection may be made to the rf antenna (36) for rf communication. The main body (2) also has an elongate fin portion (6) that extends from the base portion (4) in a direction transversely away from a mounting surface (8). The rf antenna (36) is encapsulated within the fin portion (6), the fin being in line with the light receiving portion (34).

## Description

### BACKGROUND

### a. Field of the Invention

The present invention relates to lighting installations that make use of ambient light level sensors to control the light output from a lamp, for example to allow the artificial lighting to adapt to natural lighting conditions, and that also have an antenna to permit communication with the lighting installation.

### b. Related Art

Artificial lighting plays an important role in the modern environment across all aspects of life. More than 15% of power consumption in the United Kingdom is used for lighting. There are growing pressures to reduce the energy consumption of lighting, to reduce side-effects such as light pollution and also to improve lighting quality. One approach widely used in street lighting is to sense the background, natural light levels and control the artificial lighting accordingly. This can save energy as lamps are turned on as and when required, and also can provide a better lit environment, since natural light generally provides a better quality of light than artificial light.

A street light unit may have a light level sensor and associated circuitry that is arranged to switch on a street lamp when the ambient light level drops at dusk. The circuitry then switches the lamp off again when the ambient light level rises at dawn. This provides an energy reduction and is more reliable than controlling the lamp on and off periods using timers.

When there are a number of street light units in a lighting installation, each street light unit may be individually controlled by its own light level sensor or alternatively, only some lamp units may have a light level sensor in which case different lamp units may be connected together either wirelessly or with a wired connection so that control circuitry in one controlling lamp unit can be used to control a number of lamp units depending in the ambient light level sensed by the controlling lamp unit.

Wireless communication with lamp units may also be used to communicate lamp diagnostic information.

One example of the prior art is the disclosure in patent document US 2008/0191897 which shows a street lamp unit having a light level sensor, associated control circuitry and an rf (radio-frequency) antenna for communicating data regarding the sensed light level as well as lamp diagnostic information.

Apart from communications directly concerning the operation of the lamp, an antenna may also be integrated with a lamp unit for other purposes. One example of this is the disclosure in patent document WO 2006/092308, which shows a lamp unit having a light level sensor and a communications antenna that is used not in conjunction with the control or monitoring of the lamp unit, but rather as part of a WiFi network. Advantages of this arrangement are that the circuitry controlling the antenna is powered using the existing mains power used to run the lamp, while the antennas of the WiFi network are situated at regularly spaced high points adjacent a road or path where people travel or next to where people live.

As the lamp and associated electronics to which the light level sensor will normally be enclosed in a weather-proof housing, all such units must provide a passage or aperture in the housing by which electrical signals pass between the antenna and associated electronics. In the case of the light level sensor, either the sensor is external to the housing, in which case electrical signals from the sensor must pass through a passage or aperture in the housing, or the sensor is inside the housing, in which case the housing must have a window through which ambient light reaches the sensor.

Since the light level sensor needs to detect the ambient light, it is generally mounted either wholly or partially external to the street lamp light fitting, normally on the top surface of the fitting, which places the light level sensor in a more severe operating environment and increases the risk of damage to the light level sensor. The siting of the light level sensor may also require the creation of a relatively large hole in the light fitting shell to accommodate the photocell. Such a hole is liable to leak and cause damage to the lamp and lamp drive circuitry inside.

An antenna may not need to be situated on the top surface of a lamp housing, but it will still be necessary to provide a passage through the housing to the antenna. An antenna may also be vulnerable to the weather, ice, birds, deliberate damage from vandalism or inadvertent damage during repair or maintenance of the lamp unit.

It is an object of the present invention to provide more a more convenient ambient light level sensor for a lamp unit also having an antenna for wireless communication.

### SUMMARY OF THE INVENTION

According to a first aspect of the invention, there is provided a light gathering protective cover for an ambient light level sensor comprising a main body and a radio frequency (rf) antenna for rf communication, wherein the main body is moulded in a light transmissive material and has:
- an external surface for collecting ambient light;
- a light receiving portion, within the main body, for receiving light collected from the external surface;
- a base portion, the base portion having mounting means including a mounting surface for mounting to a lamp housing and the base portion having within the bounds of the base portion a first connection means and a second connection means, the first connection means being for optically connecting a photodetector to the light receiving portion and the second connection means being for rf connection to the rf antenna;
- an elongate fin portion, the fin portion extending from the base portion in a direction transversely away from the base portion, the rf antenna being encapsulated within the fin portion, and the fin portion being in line with the light receiving portion.

In a preferred embodiment of the invention, the mounting means is for mounting on a supporting surface beneath the base portion. The first and second connection means may also be provided within the bounds of the mounting surface. The mounting means may also include a connection block, the connection block extending in a direction away from the fin portion and being provided within the bounds of the mounting surface.

In a preferred embodiment of the invention, the fin portion extends from the base portion in a direction transversely away from the mounting surface.

The antenna is therefore protectively encapsulated within the main body of the protective cover, which also functions as an optical element for an ambient light gathering system. When the mounting surface is mounted on a supporting surface, optical and electrical connections may be made to, respectively, the light receiving portion and the antenna. These connections may be made via an aperture, passage or other type of port in the supporting surface, in which case the mounting surface preferably extends fully around such a port.

Preferably, the light gathering protective cover includes a seal by which an environmentally protective seal may be made around the periphery of the mounting surface between the base portion and the supporting surface.

One advantage of having the light receiving portion in line with the fin portion, is that the fin portion may act as a light pipe to direct light that is incident on the fin portion towards the light receiving portion. The fin portion also provides protection surrounding the antenna, while at the same time not casting a shadow on the light receiving portion.

In a preferred embodiment of the invention, there is a transition portion between the base portion and the fin portion where the external surface is curved away from the fin portion. The transition portion is concavely curved, and so acts as a concave lens to incident light. This effect can be used to direct low angle light that is incident in a direction that is substantially transverse to the plane of the fin portion, towards the light receiving portion.

Preferably the fin portion extends from a central portion of the base portion. The base portion may be substantially planar and the fin portion may extend perpendicularly away from the base portion.

The light receiving portion may house a photodetector, however, in a preferred embodiment of the invention, the photodetector is remote from the light gathering protective cover, and the gathered ambient light is conveyed to the photodetector by means of a flexible light pipe, for example a polymeric optical fibre.

Therefore, the light receiving portion may be adapted to make connection to an optical fibre, for example, being a cylindrical recess in the base portion.

The second connection means for the rf antenna may comprise an rf connection for the reception or transmission of rf signals. The rf connection may then extend from the antenna to an external surface of the base portion within the bounds of the mounting surface.

The first connection means for the detection of ambient light may comprise an optical connection for a light pipe, for example a socket. The optical connection may then extend from the antenna to an external surface of the base portion within the bounds of the mounting surface.

According to a second aspect of the invention, there is provided a lighting apparatus comprising:
- a lamp for providing illumination over an area;
- a lamp driver circuit for providing electric power to the lamp; and
- at least one light level sensing means for sensing an ambient light level, the light level sensing means including an ambient light level sensor having a photodetector arranged to receive ambient light and associated electronic circuitry to provide to the lamp driver circuitry a signal for controlling the power provided to the lamp according to the sensed ambient light level, a lamp housing for housing the lamp, the housing having an external surface with an external port therein;
wherein the light level sensing means includes a light gathering protective cover for said ambient light level sensor, the light gathering protective cover being according to the first aspect of the invention, and the mounting surface of the base portion being mounted on the external surface of the housing around the port and the photodetector being optically connected to the first connection means to receive said ambient light from the light receiving portion of the main body of the light gathering protective cover.

In a preferred embodiment of the invention, the lighting apparatus comprises additionally a communications means for wireless communication between the lighting apparatus and a remote station. The communications means then includes a communications circuit, with the communications circuit being electrically connected to the first connection means to enable rf communication from the rf antenna of the light gathering protective cover.

### BRIEF DESCRIPTION OF THE DRAWINGS

The invention will now be described, by way of example only, and with reference to the accompanying drawings, in which:
Figure 1 is a perspective view of a light gathering protective cover according to a first embodiment of the invention;
Figure 2 is an end view of the protective cover of Figure 1;
Figure 3 is a plan view from the underside of the protective cover of Figure 1;
Figure 4 is a plan view from the top of the protective cover of Figure 1; and
Figure 5 is a cross-sectional view of the protective cover of Figure 1 showing additionally optical and electrical connections to a circuit board.

### DETAILED DESCRIPTION

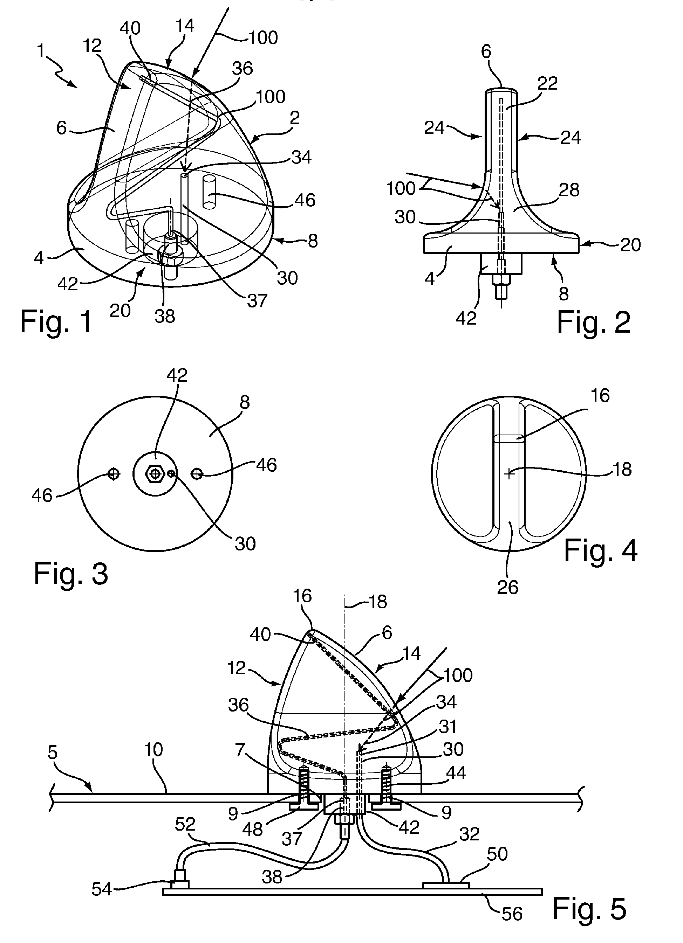

Figures 1 to 5 show various views of a light gathering protective cover 1 designed to collect ambient light 100 falling on the surface of the light gathering protective cover and convey this collected light to a photodetector 50 of a light sensing means which can be used to control, for example, the illumination of a lamp to which the light sensing means is connected.

In a preferred embodiment, the light gathering protective cover 1 comprises a main body 2 made from a light transmissive material. Typically the main body 2 will be made from a translucent or transparent plastic material.

The main body 2 of the light gathering protective cover 1 comprises a base portion 4 and a fin portion 6. In this example, the base portion 4 and fin portion 6 are integrally moulded, however, alternatively the base portion 4 and fin portion 6 may be formed separately and then joined together, the join including a weather-proof seal.

The base portion 4 is substantially disc-shaped and has a circular cross-section. A lower annular surface 8 of the base portion 4 forms a mounting surface for the light gathering protective cover 1, by which the cover may be mounted on a supporting surface 10, which will be described in greater detail hereinafter. The supporting surface 10 will most often be part of an external surface of a lamp housing 5 for housing a lamp (not shown). The housing has an aperture 7 in the external surface 10, referred to herein as a port 7. The fin portion 6 of the main body 2 extends away from the base portion 4 transversely away from the mounting surface 8, from a side opposing the mounting surface 8. In this embodiment, the fin portion 6 extends perpendicularly from the base portion 4, however, in other embodiments it may be preferable for the fin portion 6 to extend at an angle from the base portion 4.

The fin portion 6 has a generally triangular shape with a first edge surface 12 having a shorter length and steeper angle relative to the base portion 4 than a second edge surface 14, such that the first and second edge surfaces meet at an apex 16 of the fin portion which is off-set from a central axis 18 of the main body 2 that extends perpendicularly from the centre of the mounting surface 8. The fin portion 6 extends symmetrically either side of a plane of the fin portion that encompasses the central axis18.

The length of the fin portion 6 is substantially equal to the diameter of the base portion so that the two edge surfaces 12, 14 extend from the circumferential surface 20 of the base portion 4. Additionally, both edge surfaces 12, 14 are curved along their length, and as shown most clearly in Figure 5, in a preferred embodiment, both surfaces 12, 14 have a convex curvature.

The thickness of the fin portion 6 in an upper region 22, further from the base portion 4, is substantially less than the diameter of the base portion 4. Furthermore, side faces 24 of the fin portion 6 in this upper region 22 are substantially parallel to each other and substantially parallel to the plane of the fin portion 6. The arrangement of the fin portion 6 and base portion 4 is such that the central plane of the fin portion 6 passes through the axis 18 and, in this way, the fin portion 6 extends from a central portion 26 of the base portion 4.

The side faces 24 of the fin portion 6 in a lower portion 28 of the fin portion 6 are continuous with the respective faces 24 of the upper portion 22, but form a transition portion 28 between the fin portion 6 and the base portion 4. In this transition portion or region 28, the side faces 24 are substantially curved and extend from the upper portion 22 of the fin portion 6 towards the circumferential edge 20 of the base portion 4; this is shown most clearly in Figure 2. The curved portions of the side faces 24 have a concave curvature, the advantage of which will be described further hereinafter. The edge surfaces 12, 14 and side faces 24 of the fin portion 6 together define an external surface of the main body 2 for collecting ambient light that falls on the light gathering protective cover 1.

A cylindrical channel or bore 30 is formed in the main body 2 of the light gathering protective cover 1. The bore 30 extends from the mounting surface 8 into the main body 2 towards an edge surface 14 of the fin portion 6, such that the axis of the bore 30 is perpendicular to the mounting surface 8. The bore 30 provides a first connection means by which a light pipe such as an optical fibre 32 or any other similar light guide may be connected to the main body 2. Typically an optical fibre 32 will comprise an opaque cover or sheath surrounding the core of the fibre so that the core acts as an optical wave-guide. To connect the optical fibre 32 to the main body 2, an end 31 of the fibre 32 is pushed into the bore 30 in the main body 2. The diameter of the bore 30 is such that there is a sliding fit of the optical fibre 32 within the bore 30. The optical fibre 32 is pushed into the bore 30 until the end 31 of the fibre 32 abuts the end of the bore 30. An adhesive (not shown) may be used to secure the optical fibre in the bore. Such an adhesive may also be used to provide an index match between the main body 2 and the end 31 of the optical fibre 32 to maximise the light collecting ability of the fibre. In this way, the end of the bore 30 acts as a light receiving portion 34 within the main body 2.

The light gathering protective cover 1 also includes an antenna or aerial 36. The antenna 36 is typically a radio-frequency (rf) antenna 36 and comprises a metallic rod or wire. The antenna 36 is contained or embedded within the main body 2 of the light gathering protective cover 1. A first end 37 of the antenna 36 is held within a second connection means 38 in the form of an rf connector provided within the base portion 4 of the cover 1. The antenna 36 extends from one end of the rf connector 38 into the fin portion 6 such that a second end 40 of the antenna 36 is a free end. The length and shape of the antenna rod 36 is chosen for a desired transmission frequency. Generally the length of the antenna 36 will be greater than the height of the fin portion 6 and in these situations, as shown in Figures 1 and 5, the rod 36 is bent in a number of places along its length to allow it to fit within the fin portion 6.

In a preferred embodiment, the light gathering protective cover 1 further comprises a connection block 42 connected to and extending from the mounting face 8 of the base portion 4. In this example, the connection block 42 is cylindrical and is positioned centrally on the mounting face 8. Both the antenna connection means 38 and the optical connection means 30 pass through the connection block 42.

When the light gathering protective cover 1 is mounted to the surface 10, the connection block extends through the port 7. Attachment means 44 are provided either side of the connection block 42, as shown in Figure 5. The attachment means 44 comprises a pair of holes or bores 46 in the base portion 4 of the light gathering protective cover 1 extending into the main body 2 of the cover from the mounting surface 8. Screws or bolts 48, which pass though holes 9 either side of the port 7 are then used to attach the main body 2 to a suitable supporting surface 10 for example the top of a street lamp housing.

To fix the light gathering protective cover 1 to a supporting surface 10, three holes are formed in the surface. The holes are in the appropriate arrangement and of the correct dimensions to receive the connection block 42 and the two bolts 48, as shown in Figure 5. The main body 2 is first placed on the supporting surface 10 so that the connection block 42 extends through the larger of the three holes in the surface 10. The two bolts 48 are then pushed through the two smaller holes and are screwed into the holes 46 in the main body 2. The inside surfaces of the holes 46 may be threaded to receive the bolts 48. In some embodiments, it may be preferable to place a seal or gasket (not shown) between the mounting surface 8 of the main body 2 and the supporting surface 10 to provide a weather-proof or water-proof seal. The gasket may include an adhesive layer on both sides to aid in the secure attachment of the main body 2 to the supporting surface 10.

Once fixed in place, electrical and optical connections are made to the main body 2. As described previously, the first end 31 of the optical fibre 32 is pushed into the optical connection bore 30 in the base portion 4 of the main body 2. The second end of the optical fibre will typically be connected to the photodetector 50. An electrical connection 52 is made between the antenna connection means 38, which in this example is a radio-frequency (rf) connection 52, and appropriate circuitry 54 for receiving and transmitting rf signals. Typically both the photodetector 50 and the rf circuitry 54 will be mounted on a printed circuit board (PCB) 56 or similar.

In use, ambient light falls onto the external surfaces 12, 14, 24 of the light gathering protective cover 1. Because the main body 2 of the light gathering protective cover 1 is formed from a light transmissive material, the main body 2 acts as a light pipe and conveys the collected light to the light receiving portion 34, which in this example comprises the end of an optical fibre 32 mounted in the light gathering protective cover 1. The light is then conveyed by the optical fibre 32 to the photodetector 50 that measures the ambient light level. Associated circuitry sends a signal based on this measured light level to further circuitry that controls the amount of electrical power supplied to the lamp. In this way, as the ambient light level drops, the signal sent to the control circuitry acts to increase the power sent to the lamp filament and therefore increase the brightness of the lamp. As the ambient light level increases, the circuitry decreases the amount of power sent to the lamp. In practice, a threshold light level may be set and when the detected ambient light level exceeds this threshold value the circuitry may be designed to switch off power to the lamp filament.

The PCB may be mounted separately from the light gathering protective cover 1 as shown in Figure 5, or may be physically integrated with the cover. In one embodiment, not shown in the drawings, the connection block 42 may have a recess in a lower face into which is mounted a PCB having the photodetector and associated circuitry.

In some situations it may be necessary or desirable to have a single light gathering protective cover 1 mounted on one street lamp, but have the light level measured by this photodetector 50 also control a number of other lamps, for example in the same street or around the perimeter of a car park. In these circumstances, the signals generated by the photodetector 50 may be transmitted by the rf antenna 36 to rf receiver units (not shown) mounted on the other lamps. The signals received by the rf receiver units can then be used to control the power sent to each of the lamps.

Alternatively or additionally, the light level signals or electrical power signals may be transmitted by the rf antenna 36 to a remote station (not shown) used to monitor the performance of the lamps. Signals may also be sent from the remote station and received by the antenna 36 to control, for example, the power usage of the lamp.

When the light gathering protective cover 1 of the present invention is being used to control artificial light levels due to changes in ambient light levels, it will be appreciated that it is advantageous if the sensor is most sensitive to ambient light level changes at dawn and dusk, that is, when the sun is rising and setting and the sun is low in the sky.

In this respect, the light gathering protective cover 1 is preferably mounted on the supporting surface 10 so that the orientation of the fin portion 6 is such that the two faces 24 of the fin portion 6 are directed to the east and west, and the second edge surface 14 points towards the position of the sun at its highest point in the day, that is, to the south in the northern hemisphere and to the north in the southern hemisphere.

The design of the light gathering protective cover 1 of the present invention then offers two advantages over previous sensor arrangements.

Firstly, the shape of the fin portion 6 is such that the faces 24 have a much larger surface area than the first or second edge surfaces 12, 14. Light is therefore collected from a greater area when the sun is shining on these faces 24. In this way, even when the ambient light intensity is lower during sunrise and sunset, the light is being collected from a greater surface area of the fin portion 6 than in the middle of the day, thereby maximising the amount of light that may be conveyed to the light receiving portion 34 when the sun is rising and setting.

Secondly, the curvatures of the different surfaces 14, 24 of the light gathering protective cover 1 are also chosen to direct or focus the light rays conveyed within the main body 2 towards the light receiving portion 34. When the sun is in its highest position in the sky, in the middle of the day, the light gathering protective cover 1 is oriented so that the sun's rays primarily fall on the convex surface of the second edge surface 14. Because the sun is higher in the sky at this time, relative to other times of the day, the sun will be at a higher angle to the light gathering protective cover 1. The convex surface 14 acts to direct the collected light rays so that they follow a converging path within the fin portion 6 of the light gathering protective cover 1 and are efficiently conveyed to the light receiving portion 34.

Similarly, when the sun is at its lowest point in the sky, and therefore at a lower angle to the light gathering protective cover 1, either during sunrise or sunset, the sun's rays fall on the concave surface of the face 24 of the fin portion 6. The faces 24 in the transition portion 28 then act as a concave lens directing or focussing light from low angles towards the light receiving portion 36.

In this way, the features of the shape of the fin portion 6, in particular the curvature of the external surfaces 14, 24, and the position of the light receiving portion 34 within the main body 2 of the light gathering protective cover 1 combine to ensure that collected light is efficiently conveyed within the cover 1 to the light receiving portion 34 at all times of the day.

The shape of the light gathering protective cover 1 also has further advantages. The encapsulation of the rf antenna 36 within the light gathering protective cover means that the antenna 36 is less likely to be damaged, either deliberately or due to environmental factors. Also the shape of the light gathering protective cover 1 makes it difficult for a bird to perch, thereby decreasing the likelihood that light collection or rf communications will be affected by the presence of the bird.

The invention therefore provides a convenient ambient light level sensor for a lamp unit also having an antenna for wireless communication.

## Claims

1. A light gathering protective cover (1) for an ambient light level sensor comprising a main body (2) and a radio frequency (rf) antenna (36) for rf communication, wherein the main body (2) is moulded in a light transmissive material and has:
- an external surface for collecting ambient light (100);
- a light receiving portion (34), within the main body, for receiving light collected from the external surface;
- a base portion (4), the base portion having mounting means including a mounting surface (8) for mounting to a lamp housing (5) and the base portion (4) having within the bounds of the base portion a first connection means (30) and a second connection means (38), the first connection means (30) being for optically connecting a photodetector (50) to the light receiving portion (34) and the second connection means (38) being for rf connection to the rf antenna (36);
- an elongate fin portion (6), the fin portion extending from the base portion (4) in a direction transversely away from the base portion, the rf antenna (36) being encapsulated within the fin portion, and the fin portion being in line with the light receiving portion.

2. A light gathering protective cover (1) as claimed in Claim 1, in which the mounting means (8) is for mounting on a supporting surface (10) beneath the base portion (4).

3. A light gathering protective cover (1) as claimed in Claim 1 or Claim 2, in which the first and second connection means are provided within the bounds of the mounting surface (8).

4. A light gathering protective cover (1) as claimed in any preceding claim, in which the mounting means includes a connection block (42), the connection block extending in a direction away from the fin portion (6) and being provided within the bounds of the mounting surface (8).

5. A light gathering protective cover (1) as claimed in any preceding claim, in which the fin portion (6) acts as a light pipe to direct light that is incident on the fin portion towards the light receiving portion (34).

6. A light gathering protective cover (1) as claimed in any preceding claim, in which there is a transition portion (28) between the base portion (4) and the fin portion (6) where the external surface is curved away from the fin portion.

7. A light gathering protective cover (1) as claimed In Claim 6, in which the transition portion (28) focuses light that is incident on the transition portion towards the light receiving portion (34).

8. A light gathering protective cover (1) as claimed in any preceding claim, in which the fin portion (6) extends from a central portion of the base portion (4).

9. A light gathering protective cover (1) as claimed in any preceding claim, in which the fin portion (6) extends perpendicularly from the base portion (4).

10. A light gathering protective cover (1) as claimed in any preceding claim, in which the light receiving portion (34) is adapted to make connection to an optical fibre (32).

11. A light gathering protective cover (1) as claimed in any preceding claim, in which the second connection means (38) comprises an rf connection by which rf signals may be sent to or received from the rf antenna (36), the rf connection extending from the antenna to an external surface of the base portion (4) within the bounds of the mounting surface (8).

12. A light gathering protective cover (1) as claimed in any preceding claim, in which the first connection means (30) comprises an optical connection for a light pipe, the optical connection extending from the light receiving portion (34) to an external surface of the base portion (4) within the bounds of the mounting surface (8).

13. A light gathering protective cover (1) as claimed in any preceding claim, in which in the fin portion (6) extends from the base portion (4) in a direction transversely away from the mounting surface (8).

14. A lighting apparatus comprising:
- a lamp for providing illumination over an area;
- a lamp driver circuit for providing electric power to the lamp; and
- at least one light level sensing means for sensing an ambient light level (100), the light level sensing means (1, 32, 50) including an ambient light level sensor having a photodetector (50) arranged to receive ambient light (100) and associated electronic circuitry (56) to provide to the lamp driver circuitry a signal for controlling the power provided to the lamp according to the sensed ambient light level, a lamp housing (5) for housing the lamp, the housing (5) having an external surface (10) with an external port (7) therein;
wherein the light level sensing means includes a light gathering protective cover (1) for said ambient light level sensor, the light gathering protective cover (1) being as claimed in any preceding claim, and the mounting surface (8) of the base portion (4) being mounted on the external surface (10) of the housing (5) around the port (7) and the photodetector (50) being optically connected (32) to the first connection means (30) to receive said ambient light from the light receiving portion of the main body (2) of the light gathering protective cover (1).

15. A lighting apparatus as claimed in Claim 14, comprising additionally a communications means for wireless communication between the lighting apparatus and a remote station, the communications means including a communications circuit and the light gathering protective cover (1), the communications circuit being electrically connected to the first connection means (30) to enable rf communication from the rf antenna of the light gathering protective cover (1).
